# FASCICULE DE BREVET EUROPEEN

(11) **EP 3 568 311 B1**
(45) Date de publication et mention de la délivrance du brevet: **12.02.2025**
(21) Numéro de dépôt: 18715770.6
(22) Date de dépôt: 28.02.2018
(51) Int. Cl.: B60K 11/04, B60K 11/08

(54) **DISPOSITIF DE RÉGULATION D'UN FLUX D'AIR**
VORRICHTUNG ZUR STEUERUNG EINES LUFTSTROMS
DEVICE FOR CONTROLLING AN AIR FLOW

(30) Priorité: 28.02.2017 FR 1751620
(43) Date de publication de la demande: 20.11.2019
(73) Titulaire: Valeo Systemes Thermiques, 78322 Le Mesnil Saint-Denis Cedex (FR)
(72) Inventeur: DROULEZ, Eric, 78322 Le Mesnil Saint Denis Cedex (FR); PRESCHNER, Mikhaël, 78322 Le MesnilSaint Denis Cedex (FR); MARTINS, Carlos, 78322 Le Mesnil Saint Denis Cedex (FR); MAGNIER-CATHENOD, Anne-Sylvie, 78322 Le Mesnil Saint Denis Cedex (FR); GESSIER, Bertrand, 78322 Le Mesnil Saint Denis Cedex (FR)
(74) Mandataire: Valeo Systèmes Thermiques
(86) Numéro de dépôt international: PCT/FR2018/000043
(87) Numéro de publication internationale: WO 2018/158513

(56) Documents cités:
- WO-A1-2016/087545
- DE-A1- 102006 054 970
- DE-A1- 102011 009 778
- DE-A1- 102014 104 041
- DE-A1- 102014 104 784
- DE-A1- 102014 113 067
- FR-A1- 2 738 779
- US-A- 5 901 786

## Description

La présente invention concerne un dispositif de régulation d'un flux d'air circulant au sein d'un premier échangeur de chaleur pour véhicule automobile ainsi qu'un module de refroidissement muni d'un tel dispositif.

Dans ce domaine, il est connu des modules de refroidissement comprenant typiquement deux échangeurs de chaleur, un premier échangeur ayant pour fonction de refroidir un circuit annexe du véhicule, tel qu'un dispositif de climatisation ou un dispositif de refroidissement d'air de suralimentation, par l'intermédiaire d'une boucle, dite basse température, et un deuxième échangeur de chaleur, nécessaire au refroidissement du moteur du véhicule. Ils sont disposés en face avant du véhicule pour être traversés par un flux d'air entrant à travers la calandre du véhicule. Ils comprennent un faisceau d'échange de chaleur parcouru par le fluide à refroidir et traversé par l'air provenant de la calandre.

Pour former un module compact, les deux échangeurs sont assemblés et alignés en série l'un à la suite de l'autre pour qu'un flux d'air circule successivement dans les deux échangeurs. Le module est disposé dans le véhicule de sorte que l'air circule d'abord dans le premier échangeur puis dans le deuxième échangeur de chaleur, en raison des besoins de refroidissement de chacun.

Cependant, ce type de module ne permet pas de dissocier le refroidissement des deux échangeurs. Ceci représente un inconvénient car, il peut être souhaitable dans certaines situations, d'éviter de refroidir le moteur afin qu'il chauffe plus rapidement, notamment lors de son démarrage.

Parallèlement, la circulation d'air au sein du module est pénalisante pour l'aérodynamisme du véhicule. En effet l'air qui s'engouffre sous le capot du véhicule dans le module de refroidissement à l'intérieur du véhicule oppose une résistance supplémentaire au déplacement du véhicule. Il est donc d'autant plus dommageable de laisser l'air traverser tout le module lorsqu'il n'y a pas de besoin de refroidissement au niveau du second échangeur, tout en assurant l'utilisation de la climatisation ou le refroidissement de l'air de suralimentation.

Des solutions connues, comme par exemple dans le document US 2015 246 608, proposent des dispositifs de refroidissement avec un volet déroulable agencé verticalement entre deux échangeurs de chaleur. Un enroulement plus ou moins important du rideau est prévu permettant ainsi de réguler le flux d'air. Dans la majorité des cas l'ouverture de la totalité de la surface des échangeurs n'est pas nécessaire pour les besoins au refroidissement, les composants étant dimensionnés pour des conditions critiques. De plus, l'ouverture et la fermeture intempestive du rideau de manière parallèle aux tubes peut entraîner des chocs thermiques au niveau des échangeurs. Ces chocs thermiques impactent les tubes en faisant varier leur longueur. Cela crée des dilatations différentielles au niveau des pieds de tubes fixés aux collecteurs provoquant des fuites. Le risque de fuites est majoré lors d'ouvertures partielles positionnées de manière non homogène.

Les documents DE102014113067 A1 et DE102011009778 A1 divulguent les échangeurs de chaleur associés à un rideau pour réguler le flux d'air.

Le document FR2738779 A1 divulgue un cadre pour de tels rideaux comprenant des lèvres conformées pour s'appliquer sur le volet roulant. La présence des lèvres améliore l'étanchéité vis-à-vis des poussières et de l'eau.

Aucun des documents de l'art antérieur ne divulgue de dispositif permettant d'empêcher le flux d'air de pénétrer vers le noyau lorsque les rideaux sont en configuration fermée.

La présente invention est avantageuse par rapport aux documents de l'art antérieur car elle divulgue une lèvre d'étanchéité à une extrémité des rideaux permettant d'éliminer le flux d'air entre les deux rideaux lorsque le dispositif de régulation passe de la configuration ouverte à la configuration fermée.

Il y a donc un intérêt à concevoir un système d'ouvertures partielles adaptables afin d'optimiser les gains aérodynamiques au regard des besoins thermiques.

L'invention a donc pour objectif de surmonter ces inconvénients et propose pour cela un dispositif de régulation d'un flux d'air circulant au sein d'un premier échangeur de chaleur pour véhicule automobile, le dispositif de régulation comprenant au moins deux rideaux, le dispositif de régulation étant configuré pour passer d'une configuration fermée où les rideaux obturent intégralement le passage du flux d'air à une configuration ouverte où les rideaux sont positionnés de manière à laisser passer le flux d'air avec un débit maximal, caractérisé en ce que les deux rideaux sont agencés pour s'éloigner l'un de l'autre lorsque le dispositif de régulation passe de la configuration fermée à la configuration ouverte et se rapprocher l'un de l'autre lorsque le dispositif de régulation passe de la configuration ouverte à la configuration fermée.

En s'éloignant les uns des autres, par exemple à partir d'une position centrale, les volets garantissent donc en s'ouvrant que le flux d'air est orienté vers la partie centrale des échangeurs de chaleur réduisant ainsi les chocs thermiques et les dilatations différentielles au niveau des pieds de tubes.

D'autres modes de réalisations proposent que :
- les rideaux sont agencés pour occuper une ou plusieurs positions intermédiaires entre la configuration fermée et la configuration ouverte ;
- les rideaux sont agencés dans un cadre apte à empêcher tout contact entre un desdits rideaux et un échangeur de chaleur ;
- les rideaux comprennent une lèvre d'étanchéité à une extrémité, notamment l'extrémité en regard de l'autre rideau ;
- un élément de fermeture est agencé entre les deux rideaux et sur lequel les rideaux viennent s'appuyer en finissant leur course dans la configuration fermée ;
- l'élément de fermeture comporte une tige cylindrique avec des encoches notamment de forme complémentaire aux lèvres d'étanchéité ;
- un premier rideau présente une lèvre d'étanchéité avec une nervure et le second rideau présente une lèvre d'étanchéité avec une rainure de forme complémentaire à la nervure ;
- les rideaux sont configurés pour être mis en mouvement par un actionneur, l'actionneur étant un moteur couplé à l'élément de fermeture, ledit élément de fermeture étant relié à chaque rideau par l'intermédiaire d'au moins une liaison filaire ;
- les rideaux sont configurés pour être mis en mouvement par un actionneur, l'actionneur étant un moteur couplé à pignon par l'intermédiaire d'une courroie, ladite courroie étant reliée à chaque rideau par l'intermédiaire d'au moins une liaison filaire ;
- les rideaux sont configurés pour être mis en mouvement par un actionneur, l'actionneur étant un moteur couplé à une vis sans fin, la vis sans fin étant reliée à chaque rideau par l'intermédiaire d'au moins une liaison filaire,
- les rideaux sont agencés pour être mis en mouvement de manière simultanée,
- en variante, les rideaux sont agencés pour être mis en mouvement de manière indépendante, par exemple à savoir l'un commence à se mouvoir tandis que l'autre est toujours au repos ou l'un cesse de se mouvoir tandis que l'autre est toujours en déplacement,
- le dispositif de régulation comporte un ressort, notamment de torsion, agencé pour maintenir le ou les rideaux tendus en permanence,
- les rideaux sont agencés pour être mobiles perpendiculairement aux tubes des échangeurs,
- des volets de décharge peuvent être ajoutés, qui assurent l'écoulement d'air sur le premier échangeur lorsqu'il n'y a pas besoin de refroidissement sur l'échangeur de chaleur haute température, les rideaux rétractables restant fermés,
- le dispositif de régulation comporte un châssis des rideaux rétractables, lequel châssis se trouve en avant de l'échangeur de chaleur haute température,
- le châssis permet aussi de garantir l'étanchéité entre les deux radiateurs ou échangeurs de chaleur, et le dispositif de régulation,
- les axes des rideaux rétractables sont fixés sur le châssis,
- les rideaux sont agencés pour être actionnables séparément grâce à un mécanisme de poulies, notamment associé à deux actionneurs indépendants.

Selon un exemple de réalisation de l'invention, l'épaisseur des rideaux est comprise entre 0,1 to 0,15 mm.

Selon un exemple de réalisation de l'invention, l'un au moins des rideaux, notamment les deux rideaux, sont réalisés en toile, notamment en toile textile. Selon un exemple de réalisation de l'invention, la toile comporte des fibres de verre et de préférence un revêtement PTFE.

Selon un exemple de réalisation de l'invention, le cadre et les rideaux occupent un encombrement axial, mesuré suivant l'axe d'écoulement de l'air, inférieur à 30 mm, notamment inférieur à 20 mm.

L'invention concerne également un module de refroidissement comprenant
- un échangeur de chaleur basse température,
- un échangeur de chaleur haute température, et
- un dispositif de régulation tel que décrit précédemment agencé entre les deux échangeurs,
l'échangeur de chaleur basse température étant positionné en amont du dispositif de régulation et l'échangeur de chaleur haute température étant positionné en aval du dispositif de régulation.

D'autres caractéristiques et avantages de l'invention apparaîtront à la lecture de la description des différents exemples de réalisation donnés à titre illustratif en référence aux figures annexées. Sur ces figures :
- la figure 1 est une vue schématique illustrant un dispositif de régulation d'un flux d'air ainsi qu'un module de refroidissement conformes à l'invention selon une vue de haut ;
- la figure 2 est une vue schématique en perspective des éléments du dispositif de régulation d'un flux d'air selon un premier mode de réalisation ;
- la figure 2A a 2D est une vue schématique partielle du dispositif de régulation selon une vue de haut ;
- la figure 3 est une vue schématique d'un élément du dispositif de régulation selon une vue de haut ;
- la figure 4 est une vue schématique en perspective des éléments du dispositif de régulation d'un flux d'air selon un deuxième mode de réalisation ;
- la figure 5 est une vue schématique en perspective des éléments du dispositif de régulation d'un flux d'air selon un troisième mode de réalisation ;
- les figures 6 et 7 illustrent un autre exemple de mise en ouvre de l'invention.

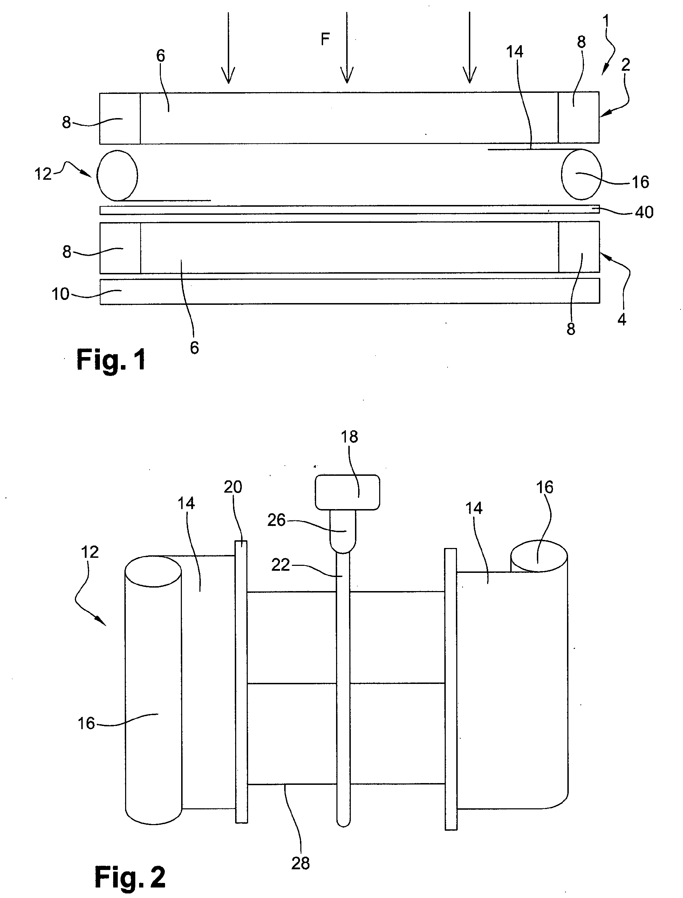

La figure 1 illustre un dispositif de régulation 12 d'un flux d'air F ainsi qu'un module de refroidissement 1 conformes à l'invention, notamment pour véhicule automobile, selon une vue de haut. Le module de refroidissement 1 comprend un échangeur de chaleur amont 2 et un échangeur de chaleur aval 4 agencés en série selon le sens d'écoulement d'un flux d'air F les traversant. Autrement dit, le module de refroidissement 1 est configuré pour être disposé sur un support, tel que le châssis d'un véhicule, de sorte que l'échangeur de chaleur amont 2 soit traversé par un flux d'air F en premier et l'échangeur de chaleur aval 4 en deuxième.

Sur la figure 1, l'échangeur de chaleur amont 2 est au premier plan et l'échangeur de chaleur aval 4 est dans un plan situé derrière. Ici, l'échangeur de chaleur amont 2 est un radiateur de refroidissement, dit basse température, servant à refroidir un liquide de refroidissement d'une boucle d'échange de chaleur, dite basse température, comprenant, notamment, un condenseur de climatisation et/ou un refroidisseur d'air de suralimentation. L'échangeur de chaleur aval 4 est un radiateur de refroidissement haute température destiné à refroidir un liquide de refroidissement d'une boucle d'échange de chaleur comprenant un moteur du véhicule. L'air qui traverse cet échangeur aval 4 refroidit le liquide de refroidissement du moteur.

Chaque échangeur 2, 4 comprend, par exemple, un faisceau 6 d'échange de chaleur et des chambre de collecte 8 disposés latéralement de part et d'autre du faisceau 6. Le faisceau 6 est traversé par le flux d'air F. Il comprend un ensemble de tubes parallèles les uns aux autres, débouchant dans les chambres de collecte 8, pour la circulation du liquide de refroidissement.

Le module de refroidissement 1 est configuré pour autoriser un écoulement d'air de manière sensiblement étanche entre lesdits échangeurs de chaleur 2,4, c'est-à-dire que l'échangeur de chaleur amont 2 et l'échangeur de chaleur aval 4 sont assemblés l'un à autre de sorte que l'échangeur de chaleur aval 4 ne soit pas directement traversé par de l'air venant de l'extérieur du module. Autrement dit, le flux d'air F traversant l'échangeur de chaleur aval 4 est issu du flux d'air F traversant l'échangeur de chaleur amont 2. Pour cela, le module de refroidissement 1 peut par exemple comprendre des moyens d'étanchéité permettant de véhiculer l'intégralité du flux d'air ayant traversé l'échangeur de chaleur amont 2 vers l'échangeur de chaleur aval 4 sans perte de débit d'air. Ces moyens d'étanchéité, non illustrés, peuvent par exemple comprendre une gaine agencée entre les deux échangeurs de chaleur amont 2,4. Une autre alternative est d'accoler les échangeurs de chaleur 2,4 l'un à l'autre.

Pour faciliter le passage d'un flux d'air dans le module de refroidissement 1, notamment lorsque le véhicule est à l'arrêt, le module comprend un groupe moto-ventilateur 10 apte à faire circuler l'air dans le module de refroidissement 1. Comme illustré sur la figure 1, le groupe moto-ventilateur 10 est disposé en aval de l'échangeur de chaleur aval 4, le groupe moto-ventilateur 10 étant configuré pour aspirer l'air depuis une entrée d'air du véhicule, qui est de préférence définie par sa calandre.

Le module de refroidissement 1 selon l'invention comprend en outre un dispositif de régulation 12 du flux d'air agencé entre l'échangeur de chaleur amont 2 et l'échangeur de chaleur aval 4. Le dispositif de régulation 12 contrôle le passage du flux d'air F de l'échangeur de chaleur amont 2 vers l'échangeur de chaleur aval 4 par l'intermédiaire de rideaux 14 rétractables, ou autrement dit des volets. glissants ou encore des films déroulants. A cette fin, les rideaux 14 peuvent passer d'une configuration fermée ou d'obturation où ils bloquent intégralement le passage du flux d'air F à une configuration ouverte ou d'ouverture où ils libèrent au maximum le passage du flux d'air F. En d'autres termes, les rideaux 14 ne font pas obstacle à l'écoulement du flux d'air F, ou autrement dit, les rideaux 14 sont positionnés de manière à laisser passer le flux d'air F avec un débit d'air maximal. Les rideaux 14 peuvent bien évidemment adopter toute position intermédiaire. Les rideaux sont par exemple réalisés en fibres de verre, notamment en fibres de verre imprégnés de PTFE.

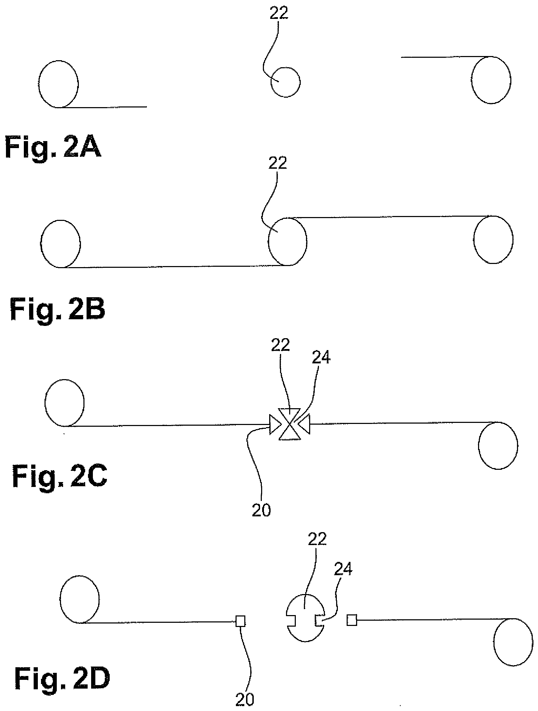

La figure 2 illustre une vue schématique plus détaillé du dispositif de régulation 12 conforme à l'invention selon une vue de face. Le dispositif de régulation 12 comprend deux rideaux 14 chacun s'enroulant ou se déroulant autour d'un support 16 pour passer de la configuration ouverte à la configuration fermée. Les supports 16 sont adaptés pour permettre l'enroulement ou le déroulement des rideaux 14. Ils peuvent par exemple être sous la forme d'un rouleau c'est-à-dire un cylindre circulaire droit (ou cylindre de révolution avec des bases étant délimités par deux cercles égaux et parallèles) comme illustré sur la figure 2. Afin de permettre le déplacement des rideaux 14, le dispositif de régulation 12 comprend un moteur ou actionneur 18. Les rideaux 14 peuvent également comprendre à leur extrémité une lèvre d'étanchéité 20.

Afin de garantir une bonne étanchéité de l'ensemble, le dispositif de régulation 12 peut comprendre un élément de fermeture 22, qui correspond à un élément sur lequel les rideaux 14 viennent s'appuyer en fin de course dans la configuration fermée, à savoir lorsqu'ils sont déroulés.

Les figures 2A à 2D illustrent différents modes de réalisation pour cet élément de fermeture 22. L'élément de fermeture 22 peut par exemple être une simple tige cylindrique comme illustré sur la figure 2A et 2B, où les volets en passant d'une configuration intermédiaire (fig. 2A) à la configuration fermée (fig. 2B) finissent leur course en s'appuyant sur l'élément de fermeture comme illustré sur la figure 2B. L'élément de fermeture 22, peut avoir d'autres formes comme par exemple une tige avec des encoches 24 de forme complémentaire aux lèvres d'étanchéité 20 (fig. 2C, 2D). L'invention ne se limite ni à la forme des lèvres d'étanchéité 20 ni à la forme des encoches.

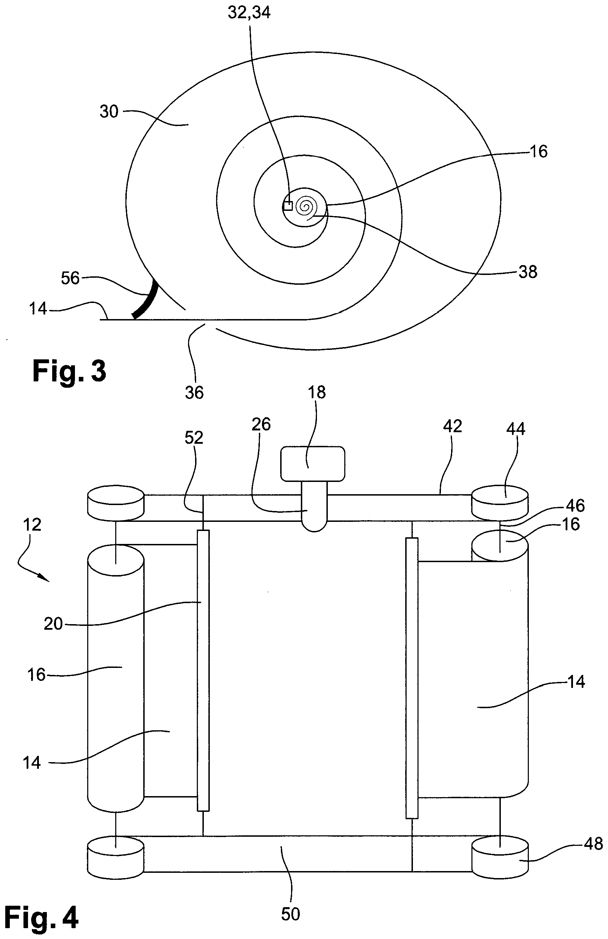

Dans la configuration ouverte, les rideaux 14 ne font pas obstacle à l'écoulement du flux d'air F. Pour cela, les rideaux 14 sont entièrement enroulés sur les supports 16. Il est possible d'agencer les rideaux 14 sur la surface externe d'un support 16 de forme cylindrique. Toutefois, dans une telle configuration les rideaux 14 sont plus exposés à l'air externe résultant ainsi en une usure et détérioration prématurées des rideaux 14. Pour remédier à cette usure, un tube creux 30 peut être agencé autour du support 16, le tube creux 30 comprend une ouverture 36 apte à laisser passer le rideau 14 comme illustré en figure 3.

Afin de nettoyer le rideau 14 et d'éviter sa détérioration prématurée ainsi que de garantir un enroulement optimal autour du support 16, le tube creux 30 peut présenter sur sa surface une ou plusieurs languettes 56 agencées de manière à frotter la surface du rideau 14 et d'enlever toutes salissures ou poussières. La ou les languettes peuvent être agencées sur la surface externe du tube creux 30 comme illustré sur la figure 3 ou sur la surface interne du tube creux 30.

Afin d'assurer un bon maintien et déplacement des rideaux 14, chaque rideau 14 peut être soudé à un support 16, ou chaque rideau 14 peut aussi comprendre une extrémité avec un élément de rétention 32, par exemple une tige en plastique, apte à s'introduire au sein d'une encoche 34, de forme complémentaire à l'élément de rétention 32, présente sur le support 16. Un ressort de rappel 38 peut être également agencé au centre du support 16 de manière à faciliter le déplacement des rideaux 14 et à maintenir les rideaux 14 tendus. Le ressort de rappel 38 est agencé de sorte qu'il soit pré-contraint lorsque les rideaux 14 sont en configuration fermée, autrement dit entièrement déroulés autour du support 16, et étiré lorsque les rideaux 14 sont en configuration ouverte, c'est-à-dire enroulés.

Afin de faire le moins d'obstacle possible à l'écoulement du flux d'air F, il convient d'agencer les supports 16 et, le cas échéant, les tubes creux 30 à proximité des chambres de collecte 8 des échangeurs de chaleurs 2,4 comme illustré sur la figure 1. On entend par cela, que les supports 16 sont agencés de sorte que les chambres de collecte 8 des échangeurs de chaleur 2,4 et les supports 16 sont alignés dans un axe longitudinal.

Afin d'éviter la détérioration des films, le dispositif de régulation 12 peut comprendre en outre un cadre hermétique 40, comprenant des barres ou une grille avec un quadrillage, de manière à laisser le flux d'air s'écoulant tout en empêchant le rideau 14 de venir en butée contre les échangeurs de chaleur 2,4. Tel qu'illustré à la figure 1, le dispositif de régulation 12 comprend un cadre hermétique 40 avec une grille agencée entre le dispositif de régulation 12 et l'échangeur de chaleur aval 4 à haute température, la chaleur pouvant détériorer les rideaux 14. Bien évidemment, il est possible de concevoir un dispositif de régulation 12 comprenant deux grilles agencées de part et d'autre du dispositif de régulation 12, ou plus précisément, une première grille positionnée entre l'échangeur de chaleur amont 2 et le dispositif de régulation 12 et une deuxième grille agencée entre l'échangeur de chaleur aval 4 et le dispositif de régulation 12. Pour éviter un contact entre les rideaux 14 et l'échangeur de chaleur de chaleur 2,4, des barres rigides liées au cadre sont positionnées au sein du cadre 40. Les barres ou le quadrillage peuvent être situées en face des tubes des échangeurs de chaleur 2,4 afin de ne pas perturber le flux.

Ces caractéristiques décrites précédemment peuvent être prises isolément ou en combinaison et peuvent être implémentées dans chaque mode de réalisation qui seront décrit ultérieurement. Les modes de réalisations suivants se différencient uniquement par la mise en oeuvre pour actionner et déplacer les rideaux 14.

Selon un premier mode de réalisation illustré à la figure 2, le moteur 18 est relié à l'élément de fermeture 22 par l'intermédiaire d'un arbre de sortie 26 permettant ainsi la rotation de l'élément de fermeture 22. L'élément de fermeture 22 est également relié aux rideaux 14, ou aux lèvres d'étanchéité 20, par l'intermédiaire d'une liaison filaire 28 ou tout autre guide envisageable telle une sangle, une tringle ou encore une bielle. Le dispositif de régulation 12 peut comprendre une seule liaison filaire 28 ou une pluralité de liaisons filaires 28, par exemple trois par rideaux 14, comme illustrée sur la figure 2, ceci afin de garantir un enroulement/déroulement homogène des rideaux 14. De cette manière un seul moteur 18 suffit à permettre le déplacement des rideaux 14.

La figure 4 illustre le dispositif de réalisation 12 selon un deuxième mode de réalisation. Le deuxième mode de réalisation est similaire au mode de réalisation décrit précédemment sauf pour l'actionnement des rideaux 14. Dans ce mode, un moteur 18, qui peut correspondre par exemple à un vérin hydraulique ou pneumatique, induit un mouvement de pivotement et déplace une première courroie 42 par l'intermédiaire de l'arbre de sortie 26. Cette première courroie 42 est reliée à deux premiers pignons 44 entrainés chacun étant associé à un support 16 de rideau 14 par l'intermédiaire d'une liaison 46 formant un axe tournant du rideau. La liaison fixe 46 peut être relié au ressort de rappel 38 et retransmettre ainsi le mouvement induit par le vérin au support 16 et donc au film 14. A titre d'alternative, la liaison fixe 46 peut traverser le support 16 sans être relié au ressort de rappel 38 et relier un premier pignon 44 à un second pignon 48, les premier et second pignons 44,48 étant agencés de part et d'autre du support 16. Les deux seconds pignons 48 sont également reliés entre eux par une seconde courroie 50. Afin de faciliter les déplacements des rideaux 14, les première et seconde courroies 42, 50 comprennent des liaisons filaires 52 reliant ainsi chaque courroie aux deux extrémités d'un rideau 14, en particulier au niveau de la lèvre d'étanchéité 20 comme illustré sur la figure 4.

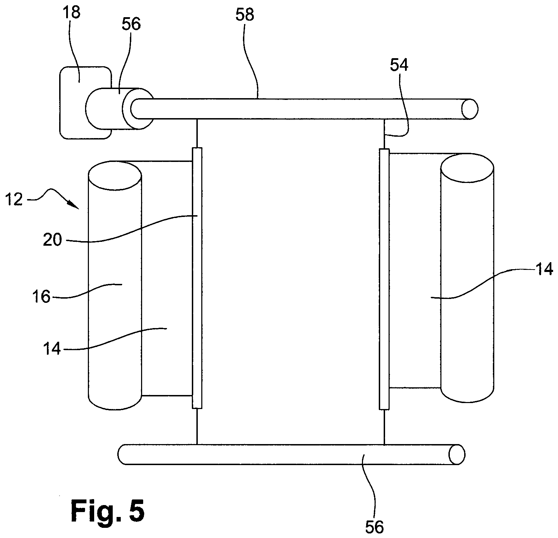

La figure 5 illustre le dispositif de réalisation 12 selon un troisième mode de réalisation. Le troisième mode de réalisation est similaire aux modes de réalisation décrits précédemment hormis pour l'actionnement des rideaux 14. Dans ce mode, un moteur 18, qui peut correspondre par exemple à un vérin hydraulique ou pneumatique, induit un mouvement de pivotement par l'intermédiaire de l'arbre de sortie 26 à une vis sans fin 58. La vis sans fin 58 contient des pas inversés et est reliée à chaque rideau 14, par exemple au niveau de la lèvre d'étanchéité 20, par une liaison filaire 54, telle une sangle, de telle façon que lorsque la vis sans fin 58 entre en rotation, la liaison filaire 54 se déplace entrainant ainsi le déplacement du rideau 14. Le dispositif de régulation 12 peut comprendre en outre une seconde vis sans fin 56 agencé à l'extrémité opposée des rideaux 14 et qui est également reliée à chaque rideau 14 par une liaison filaire 54.

Dans ce mode de réalisation, la liaison filaire 54 peut par exemple correspondre à un fil fixé par un trou, un crochet, ou encore un clip agencé sur le rideau 14 ou sur la lèvre d'étanchéité 20 d'une part, et d'autre part être fixé à un écrou glissant sur la vis sans fin 56,58.

Bien que l'élément de fermeture 22 soit principalement décrit dans le premier mode de réalisation, un tel élément peut être également agencé dans les deuxième et troisième modes de réalisation. Dans le premier mode de réalisation, l'élément de fermeture 22 permet de transmettre le mouvement de rotation induit par le moteur 18 et de garantir l'étanchéité du dispositif de régulation 12 lorsque les rideaux 14 sont dans la configuration fermée. L'ajout d'un élément de fermeture 22 tel que décrit précédemment dans les deuxième et troisième modes de réalisation permet de garantir l'étanchéité du dispositif de régulation 12 lorsque les rideaux 14 sont dans la configuration fermée. Un tel élément de fermeture peut par exemple être fixé au cadre hermétique 40 ou aux échangeurs de chaleur 2, 4.

A titre d'alternative, il est envisageable de ne pas mettre d'élément de fermeture dans les modes de réalisation 2 et 3 et d'ajouter des lèvres d'étanchéité de forme complémentaire. Par exemple, le dispositif de régulation 12 peut comprendre un premier rideau 14 ayant une lèvre d'étanchéité 20 avec une protubérance sur toute sa hauteur et un second rideau 14 ayant une lèvre d'étanchéité 20 avec une encoche de forme complémentaire à la protubérance sur toute sa hauteur. En d'autre terme, un premier rideau 14 peut présenter une lèvre d'étanchéité 20 avec une nervure à son extrémité tandis que le second rideau, 14 présentera une lèvre d'étanchéité 20 avec une rainure de forme complémentaire à la nervure à son extrémité.

Le dispositif de régulation 12 selon l'invention est plus avantageux par rapport à l'art antérieur puisqu'il garantit une ouverture partielle réglable de manière continue permettant ainsi d'adapter le refroidissement de manière précise et d'obtenir un meilleur gain aérodynamique. De plus, l'ouverture au centre des échangeurs de chaleur 2,4 permet d'optimiser leur fonctionnement. D'autre part, l'ouverture partielle est située au centre des échangeurs de chaleur 2,4 de manière perpendiculaire aux tubes, évitant ainsi les dilatations différentielles au niveau des pieds de tubes fixés aux chambres de collecte 8 et donc les fuites.

De plus, le dispositif de régulation 12 permet d'avoir un déplacement un déplacement des rideaux 14 qui soit de manière synchrone ou symétrique comme décrit dans les modes de réalisation précédents.

Il est aussi possible d'avoir un dispositif de régulation 12 permettant d'avoir un déplacement asymétrique des rideaux 14. Nous pouvons citer à titre d'exemple le rajout d'un élément de fermeture 22 en deux parties où chaque partie est actionnée par un moteur 18 distinct. Il y a aussi l'utilisation d'une vis sans fin 56, 58 avec des pas inversés et de tailles différentes. Nous pouvons également évoquer l'idée d'agencer des ressorts de rappel 38 au sein de chaque support 16 présentant des forces de rappel différentes. Enfin, nous pouvons également évoquer la possibilité d'agencer deux moteurs 18 où chaque moteur 18 actionne un seul rideau 14.

Bien que le dispositif de régulation 12 soit décrit comme étant agencé entre les deux échangeurs de chaleur 2,4, il est également possible de l'agencer en aval de l'échangeur de chaleur aval 4 ou en amont de l'échangeur de chaleur amont 2.

Il doit être bien entendu toutefois que ces exemples de réalisation sont donnés à titre d'illustration de l'objet de l'invention. L'invention n'est pas limitée à ces modes de réalisation décrits précédemment et fournis uniquement à titre d'exemple. Elle englobe diverses modifications, formes alternatives et autres variantes que pourra envisager l'homme du métier dans le cadre de la présente invention et notamment toute combinaison des différents modes de réalisation décrits précédemment.

On va maintenant décrire en référence aux figues 6 et 7 un autre exemple de mise en oeuvre de l'invention.

Dans cet exemple, les rideaux 14 sont agencés pour être actionnables séparément.

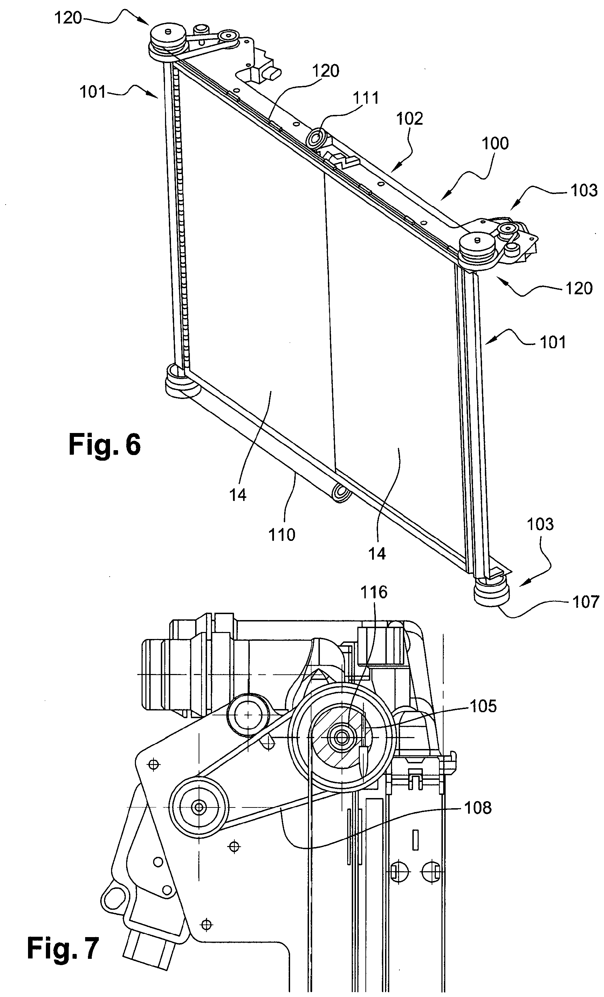

Comme illustré sur la figure 6, le dispositif de régulation comporte un châssis 100 des rideaux rétractables 14, lequel châssis se trouve en avant de l'échangeur de chaleur haute température 4. Les axes 101 des rideaux rétractables 14 sont fixés sur le châssis 100.

L'ouverture rectangulaire 102 du châssis 100 et les paliers 103 des axes sont placés de manière à faciliter le déplacement des rideaux rétractables 14.

Comme visible sur la figure 7, les rideaux rétractables 14 sont fixés sur l'axe 101 grâce à une encoche rectangulaire 105.

A chaque extrémité de l'axe 101, un engrenage est fixé pour s'engager d'un côté dans une poulie 107 avec un engrenage intérieur et de l'autre côté sur l'engrenage d'actionnement à travers une courroie 108.

Un fil 110 est disposé sur chaque poulie. Les chemins de fil vont jusqu'au milieu du dispositif de régulation, s'enroulent autour d'une poulie folle 111 et sont ensuite fixés sur la main courante des rideaux rétractables 14.

Les plaques d'attache des poulies folles présentent également une encoche rectiligne pour le déplacement de la main courante.

Cette encoche est revêtue d'un joint en fibre pour limiter la fuite d'air.

Au-dessus de la poulie 107, un ressort de torsion 116 est inséré d'un côté dans une encoche carrée de l'axe et de l'autre côté dans un couvercle. Le ressort 116 permet de maintenir les rideaux rétractables 14 grâce à la force appliquée par le ressort sur l'axe. Ce ressort 116 est agencé pour contribuer à gérer les vitesses d'ouverture et de fermeture.

En plus de ce mécanisme, une grille est fixée sur le châssis 100 entre les rideaux rétractables 14 et l'échangeur de chaleur haute température 4 afin d'éviter d'endommager les rideaux rétractables 14 fermés lorsque l'air est soufflé.

Grâce aux deux actionneurs 120 et au système de poulie, d'engrenage et de fil, les rideaux rétractables 14 peuvent être enroulés et déroulés séparément.

Le premier avantage est d'assurer le mode de sécurité: en cas de dysfonctionnement de l'un des actionneurs ; il permet d'ouvrir l'autre rideau pour refroidir quoiqu'il arrive l'échangeur de chaleur haute température 4. Le deuxième avantage est l'ouverture au milieu du noyau de l'échangeur de chaleur haute température 4. Ceci permet de limiter le choc thermique sur les pieds de tubes et dans la plupart des cas, l'ouverture des rideaux rétractables 14 est alignée avec l'axe d'un ventilateur. Le flux d'air peut être bien guidé et maximisé compte tenu de la plus petite ouverture.

Une fonctionnalité supplémentaire pourrait être ajoutée sur les plaques de fixation. Ainsi, comme illustré sur la figure 6, des volets de décharge 120 peuvent être ajoutés, qui assurent l'écoulement d'air sur le premier échangeur lorsqu'il n'y a pas besoin de refroidissement sur l'échangeur de chaleur haute température 4, les rideaux rétractables 14 restant fermés. Les volets de décharge 120 peuvent être actionnés grâce à une sur-course des rideaux rétractables 14. La main courante pousse alors un ergot qui ouvre le volet de décharge.

## Revendications

1. Dispositif de régulation (12) d'un flux d'air (F) circulant au sein d'un premier échangeur de chaleur (4) pour véhicule automobile, le dispositif de régulation (12) comprenant au moins deux rideaux (14), le dispositif de régulation (12) étant configuré pour passer d'une configuration fermée où les rideaux (14) obturent intégralement le passage du flux d'air (F) à une configuration ouverte où les rideaux (14) sont positionnés de manière à laisser passer le flux d'air (F) avec un débit maximal, dans lequel les deux rideaux (14) sont agencés pour s'éloigner l'un de l'autre lorsque le dispositif de régulation (12) passe de la configuration fermée à la configuration ouverte et se rapprocher l'un de l'autre lorsque le dispositif de régulation (12) passe de la configuration ouverte à la configuration fermée, **caractérisé en ce que** les rideaux (14) comprennent une lèvre d'étanchéité (20) à une extrémité.

2. Dispositif de régulation (12) selon la revendication 1, dans lequel les rideaux (14) sont agencés dans un cadre (40) apte à empêcher tout contact entre un desdits rideaux et un échangeur de chaleur (2,4).

3. Dispositif de régulation (12) selon l'une quelconque des revendications 1 ou 2, dans lequel un élément de fermeture (22) est agencé entre les deux rideaux (14) et sur lequel les rideaux (14) viennent s'appuyer en finissant leur course dans la configuration fermée.

4. Dispositif de régulation (12) selon la revendication 3 , dans lequel un élément de fermeture (22) comporte une tige cylindrique avec des encoches (24) notamment de forme complémentaire aux lèvres d'étanchéité (20).

5. Dispositif de régulation (12) selon l'une des revendications précédentes , dans lequel un premier rideau (14) présente une lèvre d'étanchéité (20) avec une nervure et le second rideau (14) présente une lèvre d'étanchéité (20) avec une rainure de forme complémentaire à la nervure.

6. Dispositif de régulation (12) selon l'une quelconque des revendications 3 ou 4, dans lequel les rideaux (14) sont configurés pour être mis en mouvement par un actionneur, l'actionneur étant un moteur (18) couplé à l'élément de fermeture (22), ledit élément de fermeture (22) étant relié à chaque rideau (14) par l'intermédiaire d'au moins une liaison filaire (28).

7. Dispositif de régulation (12)selon l'une quelconque des revendications 1 à 5, dans lequel les rideaux (14) sont configurés pour être mis en mouvement par un actionneur, l'actionneur étant un moteur (18) couplé à pignon (44) par l'intermédiaire d'une courroie (42), ladite courroie étant reliée à chaque rideau (14) par l'intermédiaire d'au moins une liaison filaire (52).

8. Dispositif de régulation (12) selon l'une quelconque des revendications 1 à 5dans lequel les rideaux (14) sont configurés pour être mis en mouvement par un actionneur, l'actionneur étant un moteur (18) couplé à une vis sans fin (58), la vis sans fin (58) étant reliée à chaque rideau (14) par l'intermédiaire d'au moins une liaison filaire (54).

9. Dispositif selon l'une des revendications précédentes, dans lequel l'épaisseur des rideaux est comprise entre 0,1 to 0,15 mm.

10. Dispositif selon l'une des revendications précédentes, dans lequel l'un au moins des rideaux, notamment les deux rideaux, sont réalisés en toile, notamment en toile textile.

11. Dispositif selon la revendication précédente, dans lequel la toile comporte des fibres de verre et de préférence un revêtement PTFE.

12. Dispositif selon l'une des revendications précédentes, dans lequel le cadre et les rideaux occupent un encombrement axial, mesuré suivant l'axe d'écoulement de l'air, inférieur à 30 mm, notamment inférieur à 20 mm.

13. Module de refroidissement comprenant,
- un échangeur de chaleur (2) basse température,
- un échangeur de chaleur (4) haute température, et
- un dispositif de régulation (12) selon l'une quelconque des
revendications précédentes agencé entre les deux échangeurs (2,4), l'échangeur de chaleur (2) basse température étant positionné en amont du dispositif de régulation (12) et l'échangeur de chaleur (4) haute température étant positionné en aval du dispositif de régulation (12).

## Patentansprüche

1. Regulierungsvorrichtung (12) zur Regulierung eines in einem ersten Wärmetauscher (4) zirkulierenden Luftstroms (F) für ein Kraftfahrzeug, wobei die Regulierungsvorrichtung (12) mindestens zwei Rollos (14) umfasst, wobei die Regulierungsvorrichtung (12) dazu ausgestaltet ist, aus einer geschlossenen Konfiguration, in der die Rollos (14) den Durchlass des Luftstroms (F) vollständig verschließen, in eine geöffnete Konfiguration überzugehen, in der die Rollos (14) so angeordnet sind, dass der Luftstrom (F) mit einem maximalen Durchsatz durchgelassen wird, wobei die beiden Rollos (14) dazu ausgebildet sind, sich voneinander zu entfernen, wenn die Regulierungsvorrichtung (12) aus der geschlossenen Konfiguration in die geöffnete Konfiguration übergeht, und sich einander zu nähern, wenn die Regulierungsvorrichtung (12) aus der geöffneten Konfiguration in die geschlossene Konfiguration übergeht, **dadurch gekennzeichnet, dass** die Rollos (14) an einem Ende eine Dichtlippe (20) umfassen.

2. Regulierungsvorrichtung (12) nach Anspruch 1, wobei die Rollos (14) in einem Rahmen (40) ausgebildet sind, der geeignet ist, jeden Kontakt zwischen einem der Rollos und einem Wärmetauscher (2,4) zu verhindern.

3. Regulierungsvorrichtung (12) nach einem der Ansprüche 1 bis 3, wobei ein Verschlusselement (22) zwischen den beiden Rollos (14) ausgebildet ist, auf dem sich die Rollos (14) bei Beendigung ihres Wegs in die geschlossene Konfiguration abstützen.

4. Regulierungsvorrichtung (12) nach Anspruch 4 abhängig von 3, wobei ein Verschlusselement (22) eine zylindrische Stange mit Nuten (24) beinhaltet, insbesondere mit zu den Dichtlippen (20) komplementärer Form.

5. Regulierungsvorrichtung (12) nach Anspruch 3, wobei ein erstes Rollo (14) eine Dichtlippe (20) mit einer Rippe aufweist und das zweite Rollo (14) eine Dichtlippe (20) mit einer Rille mit zur Rippe komplementärer Form aufweist.

6. Regulierungsvorrichtung (12) nach einem der Ansprüche 4 oder 5, wobei die Rollos (14) dazu ausgestaltet sind, von einem Aktor in Bewegung versetzt zu werden, wobei der Aktor ein Motor (18) ist, der mit dem Verschlusselement (22) gekoppelt ist, wobei das Verschlusselement (22) mit jedem Rollo (14) über mindestens eine Drahtverbindung (28) verbunden ist.

7. Regulierungsvorrichtung (12) nach Anspruch 1 bis 6, wobei die Rollos (14) dazu ausgestaltet sind, von einem Aktor in Bewegung versetzt zu werden, wobei der Aktor ein Motor (18) ist, der mit Zahnrad (44) über einen Riemen (42) gekoppelt ist, wobei der Riemen mit jedem Rollo (14) über mindestens eine Drahtverbindung (52) verbunden ist.

8. Regulierungsvorrichtung (12) nach Anspruch 1 bis 6, wobei die Rollos (14) dazu ausgestaltet sind, von einem Aktor in Bewegung versetzt zu werden, wobei der Aktor ein Motor (18) ist, der mit einer Schnecke (58) gekoppelt ist, wobei die Schnecke (58) mit jedem Rollo (14) über mindestens eine Drahtverbindung (54) verbunden ist.

9. Vorrichtung nach einem der vorhergehenden Ansprüche, wobei die Dicke der Rollos zwischen 0,1 und 0,15 mm beträgt.

10. Vorrichtung nach einem der vorhergehenden Ansprüche, wobei mindestens eines der Rollos, insbesondere beide Rollos, aus Stoff ausgeführt sind, insbesondere aus textilem Stoff.

11. Vorrichtung nach dem vorhergehenden Anspruch, wobei der Stoff Glasfasern und bevorzugt eine PTFE-Beschichtung beinhaltet.

12. Vorrichtung nach einem der vorhergehenden Ansprüche, wobei der Rahmen und die Rollos einen axialen Bauraum, gemessen entlang der Strömungsachse der Luft, von weniger als 30 mm, insbesondere weniger als 20 mm einnehmen.

13. Kühlmodul, umfassend
- einen Niedertemperatur-Wärmetauscher (2),
- einen Hochtemperatur-Wärmetauscher (4) und
- eine Regulierungsvorrichtung (12) nach einem der vorhergehenden Ansprüche, die zwischen den beiden Wärmetauschern (2,4) ausgebildet ist,
wobei der Niedertemperatur-Wärmetauscher (2) stromauf der Regulierungsvorrichtung (12) angeordnet ist und der Hochtemperatur-Wärmetauscher (4) stromab der Regulierungsvorrichtung (12) angeordnet ist.

## Claims

1. Device (12) for controlling an air flow (F) circulating in a first heat exchanger (4) for a motor vehicle, the control device (12) comprising at least two screens (14), the control device (12) being configured to go from a closed configuration in which the screens (14) obstruct the passage of the air flow (F) completely to an open configuration in which the screens (14) are positioned in such a manner as to allow the air flow (F) to pass with a maximum flow rate, in which the two screens (14) are adapted to be moved away from one another when the control device (12) goes from the closed configuration to the open configuration and to be moved toward one another when the control device (12) goes from the open configuration to the closed configuration, **characterized in that** the screens (14) include a lip seal (20) at one end.

2. Control device (12) according to Claim 1, in which the screens (14) are arranged in a frame (40) adapted to prevent all contact between one of said screens and a heat exchanger (2, 4).

3. Control device (12) according to any one of Claims 1 to 3, in which a closing element (22) is arranged between the two screens (14) and on which the screens (14) come to bear on completing their travel into the closed configuration.

4. Control device (12) according to Claim 4 when dependent on 3, in which a closing element (22) includes a cylindrical rod with notches (24) in particular of complementary shape to the lip seals (20).

5. Control device (12) according to Claim 3, in which a first screen (14) includes a lip seal (20) with a rib and the second screen (14) includes a lip seal (20) with a groove of complementary shape to the rib.

6. Control device (12) according to either one of Claims 4 and 5, in which the screens (14) are configured to be moved by an actuator, the actuator being a motor (18) coupled to the closing element (22), said closing element (22) being connected to each screen (14) by means of at least one filamentary connection (28).

7. Control device (12) according to Claims 1 to 6, in which the screens (14) are configured to be moved by an actuator, the actuator being a motor (18) coupled to a gear (44) by means of a belt (42), said belt being connected to each screen (14) by means of at least one filamentary connection (52).

8. Control device (12) according to Claims 1 to 6, in which the screens (14) are configured to be moved by an actuator, the actuator being a motor (18) coupled to a lead screw (58), the lead screw (58) being connected to each screen (14) by means of at least one filamentary connection (54).

9. Device according to any one of the preceding claims, in which the thickness of the screens is between 0.1 and 0.15 mm inclusive.

10. Device according to any one of the preceding claims, in which at least one of the screens, in particular both screens, is/are made of canvas, in particular of textile canvas.

11. Device according to the preceding claim, in which the canvas includes glass fibres and preferably a PTFE coating.

12. Device according to any one of the preceding claims, in which the frame and the screens have an overall size in the axial direction measured along the axis of flow of the air less than 30 mm, in particular less than 20 mm.

13. Cooling module comprising:
- a low-temperature heat exchanger (2),
- a high-temperature heat exchanger (4), and
- a control device (12) according to any one of the preceding claims arranged between the two exchangers (2, 4),
the low-temperature heat exchanger (2) being positioned on the upstream side of the control device (12) and the high-temperature heat exchanger (4) being positioned on the downstream side of the control device (12).
